# EUROPEAN PATENT SPECIFICATION

(11) **EP 3 202 957 B1**
(45) Date of publication and mention of the grant of the patent: **29.07.2020**
(21) Application number: 15846428.9
(22) Date of filing: 18.08.2015
(51) Int. Cl.: C25F 3/04, C25D 11/08, C25D 11/20, C25D 11/24, H01M 4/66, H01M 4/74, H01G 11/70

(54) **ALUMINUM PLATE**
ALUMINIUMPLATTE
PLAQUE D'ALUMINIUM

(30) Priority: 30.09.2014 JP 2014200514
(43) Date of publication of application: 09.08.2017
(73) Proprietor: Fujifilm Corporation, Minato-ku Tokyo 106-8620 (JP)
(72) Inventor: KAWAGUCHI Junji, Shizuoka 421-0396 (JP)
(74) Representative: Hoffmann Eitle
(86) International application number: PCT/JP2015/073146
(87) International publication number: WO 2016/051976

(56) References cited:
- WO-A1-2015/115531
- JP-A- 2005 129 924
- JP-A- 2011 222 672
- JP-A- 2011 249 150

## Description

### BACKGROUND OF THE INVENTION

### 1. Field of the Invention

The present invention relates to an aluminum plate used in collectors for storage devices.

### 2. Description of the Related Art

In recent years, in response to the development of portable devices such as personal computers and mobile phones, hybrid vehicles, electric vehicles, and the like, the demand for storage devices, particularly, lithium ion capacitors, lithium ion secondary batteries, and electric double layer capacitors as power supplies has increased.

It is known that, as electrode collectors that are used for positive electrodes or negative electrodes in the above-described storage devices (hereinafter, simply referred to as "the collectors"), aluminum plates are used. In addition, it is known that an active material such as activated charcoal is applied onto the surface of a collector made of this aluminum plate and is used as electrodes such as positive electrodes or negative electrodes.

For example, JP2013-077734A describes the use of metal foils having a plurality of through holes as collectors, describes aluminum, copper, and the like as materials therefor, and describes an electrode having an active material layer(s) on either or both surfaces of this metal foil ([Claim 1] and [0021]).

In addition, WO2011/004777A describes the use of an aluminum perforated foil as a collector and describes the application of an active material onto this aluminum perforated foil ([Claim 1] and [0036]).

In addition, WO2001/091212A describes the use of a net-like porous body as a core for porous electrodes and describes the loading of an active material into a core ([Abstract] and [Disclosure of the Invention]).

In the above-described collectors, through holes are formed to facilitate the migration of lithium ions, and, when lithium ions are pre-doped, lithium ions diffuse through the through holes and are doped into negative electrodes. Therefore, it is desirable to form a number of through holes in order to efficiently carry out pre-doping.

Here, as described in WO2001/091212A, as a method for forming through holes, forming methods by means of mechanical working such as punching are known. However, through holes formed by means of punching are large holes having a diameter of 300 µm or more. Generally, collectors are thin plate-like members, and thus, when the diameters of through holes are large, the strength of the collectors decreases.

In addition, when the diameters of through holes are large, protrusions and recesses corresponding to the through holes in the collector are generated on the surface of the applied active material or the active material bleeds through, and thus the uniformity of the active material surface is impaired, and the coating properties degrade.

Therefore, the formation of fine through holes has been proposed.

For example, JP2013-077734A describes that, when the minimum hole diameter of the through holes is set in a range of 0.01 mm to 0.19 mm, the pattern of the through holes being reflected on the surface of the active material layer is prevented, and the surface roughness of the active material layer decreases ([0022]).

In addition, WO2011/004777A describes that the inner diameters of through holes are set in a range of 0.2 µm to 5 µm ([0032]).

In addition, the above-described fine through holes are formed by means of electrolytic etching as described in, for example, WO2011/004777A ([0052]).

JP2011222672A discloses an aluminum foil which is subjected to chemical etching or electrolytic etching to obtain an aluminum foil in which many through holes are formed while being scattered. A plurality of layers of different kinds of metal film consisting of materials different from the aluminum foil are laminated on a surface of the perforated aluminum foil thus obtained. The different kinds of metal film are a substitution layer consisting of Zn or a Zn alloy, a resistive layer consisting of Ni or a Ni alloy, and an electroplated Cu layer. JP2011249150A discloses an aluminum foil for a power storage device collector having a composition where Ni is contained in 20 to 300 ppm in mass% and the remaining part is comprised of Al in 99% or more and inevitable impurities, and having a thickness of less than 50 µm. In the aluminum foil for a power storage device collector, a through-hole is formed by etching by producing an Al-Ni sludge in a base. It is preferable for the aluminum foil that a ratio of crystal grains through a cross section in a thickness direction is 10% or more and that the through-hole having a diameter of 0.5 to 500 µm is present in an area ratio of 5 to 50%. JP2005129924A discloses a metal collector having a through hole with hole diameter of 1-100 µm. The collector holds the active carbons to be a polarizable electrode. The electrode and electrolyte constitute the electric double layer capacitor.

WO2015115531A1 discloses a method for manufacturing an aluminum plate, the aluminum plate having an aluminum base material having a plurality of penetrating holes in the direction of thickness. According to this document, the method for manufacturing an aluminum plate has an oxide film-forming step in which an oxide film-forming treatment is performed on a surface of the aluminum base material having a thickness of 5-1000 µm and an oxide film is formed. The method also comprises a penetrating hole-forming step performed after the oxide film-forming step, in which an electrochemical dissolution treatment is performed and penetrating holes are formed.

### SUMMARY OF THE INVENTION

However, it was found that, when, simply, a number of fine through holes are formed, there are cases in which pre-doping cannot be efficiently carried out.

Regarding this fact, the present inventors carried out detailed studies and found that, when there are regions in which the inter-hole distance between adjacent through holes is far, it becomes difficult for lithium ions to arrive at those regions. That is, the diffusivity of lithium ions deteriorates. Thus, a long time is taken until the completion of pre-doping, and it is not possible to efficiently carry out pre-doping.

Meanwhile, in the following description, the efficiency of pre-doping will also be referred to as "pre-doping characteristics".

Here, there are cases in which, when the diameters of through holes are increased, the pre-doping characteristics can be improved. However, as described above, when the diameters of through holes are increased, the coating properties of active materials degrade.

Therefore, an object of the present invention is to provide an aluminum plate having favorable coating properties and pre-doping characteristics.

The present inventors carried out intensive studies in order to achieve the above-described object, consequently found that, when an aluminum plate is provided with an average opening diameter of through holes of 1 µm to 100 µm, a density of the through holes of 50 through holes/mm² to 2,000 through holes/mm², and a maximum value of the inter-hole distance between adjacent through holes of 300 µm or less, wherein the aluminum plate is obtainable by carrying out the steps in the claims, it is possible to realize favorable coating properties and pre-doping characteristics, and completed the present invention.

That is, it was found that the above-described object can be achieved by means of the following constitutions.
[1] An aluminum plate having a plurality of through holes that penetrate in a thickness direction, in which an average opening diameter of the through holes is 1 µm to 100 µm, a density of the through holes is 50 through holes/mm² to 2,000 through holes/mm², and a maximum value of the inter-hole distance between adjacent through holes is 300 µm or less, wherein the aluminum plate having a plurality of through holes is obtainable by carrying out the following steps:
   an oxidized film-forming step of forming an oxidized film by carrying out an oxidized film-forming treatment on the surface of an aluminum substrate,
   a through hole-forming step of forming through holes by carrying out an electrochemical dissolution treatment after the oxidized film-forming step, and
   an oxidized film-removing step of removing the oxidized film from the aluminum plate.
[2] The aluminum plate according to [1], in which an average of the inter-hole distances between adjacent through holes is 150 µm or less.
[3] The aluminum plate according to [1] or [2], in which the average opening diameter of the through holes is more than 5 µm and 80 µm or less.
[4] The aluminum plate according to any one of [1] to [3], in which a percentage of the through holes having an opening diameter of 5 µm or less is 50% or less.
[5] The aluminum plate according to any one of [1] to [4], comprising: a metal layer made of a metal plate covering at least an inner surface of the through holes.
[6] The aluminum plate according to any one of [1] to [5], wherein the thickness of the aluminum substrate is 10 µm to 30 µm.

As described below, according to the present invention, it is possible to provide an aluminum plate having favorable coating properties and pre-doping characteristics.

### BRIEF DESCRIPTION OF THE DRAWINGS

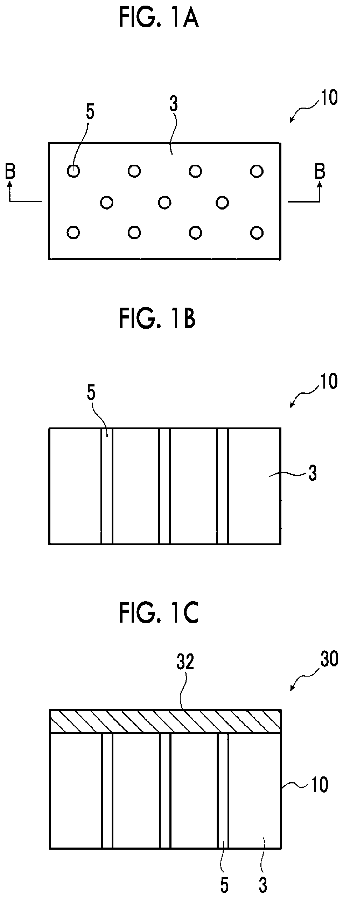

FIG. 1A is a top view schematically illustrating an example of an aluminum plate of the present invention, FIG. 1B is a sectional view in a direction of a B-B line in FIG. 1A, and FIG. 1C is a schematic sectional view illustrating an electrode in which FIG. 1A is used as a collector.

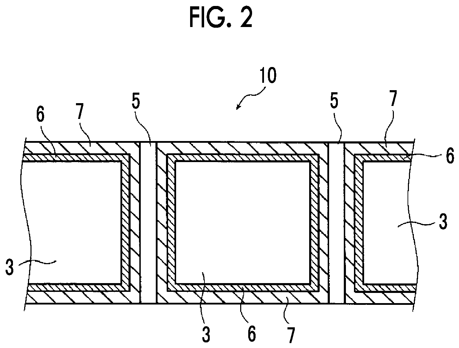

FIG. 2 is a schematic sectional view illustrating another example of the aluminum plate of the present invention.

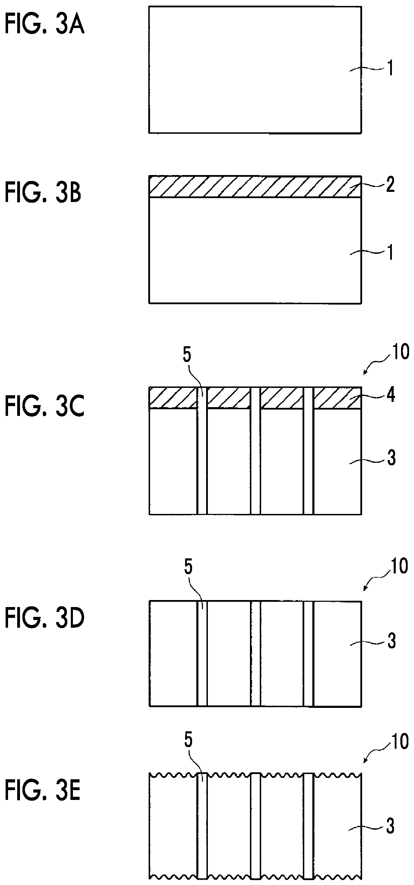

FIGS. 3A to 3E are schematic sectional views for describing an example of a preferred method for manufacturing an aluminum plate of the present invention, in which FIG. 3A is a schematic sectional view of an aluminum substrate, FIG. 3B is a schematic sectional view illustrating a state in which an oxidized film-forming treatment is carried out on the aluminum substrate so as to form an oxidized film, FIG. 3C is a schematic sectional view illustrating a state in which an electrochemical dissolution treatment is carried out after the oxidized film-forming treatment so as to form through holes in the aluminum substrate and the oxidized film, FIG. 3D is a schematic sectional view illustrating a state after the oxidized film is removed following the electrochemical dissolution treatment, and FIG. 3E is a schematic sectional view illustrating a state after an electrochemical roughening treatment is further carried out following the removal of the oxidized film.

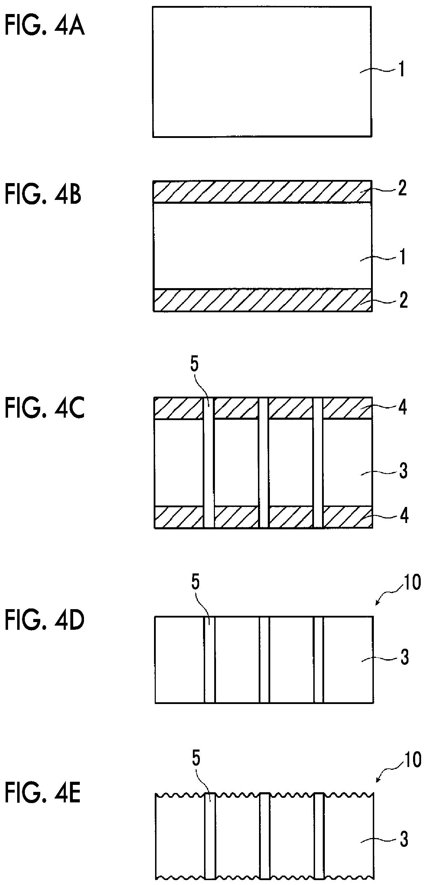

FIGS. 4A to 4E are schematic sectional views for describing another example of the preferred method for manufacturing an aluminum plate of the present invention, in which FIG. 4A is a schematic sectional view of an aluminum substrate, FIG. 4B is a schematic sectional view illustrating a state in which the oxidized film-forming treatment is carried out on the aluminum substrate so as to form oxidized films on a front surface and a rear surface, FIG. 4C is a schematic sectional view illustrating a state in which the electrochemical dissolution treatment is carried out after the oxidized film-forming treatment so as to form through holes in the aluminum substrate and the oxidized films, FIG. 4D is a schematic sectional view illustrating a state after the oxidized films are removed following the electrochemical dissolution treatment, and FIG. 4E is a schematic sectional view illustrating a state after the electrochemical roughening treatment is further carried out following the removal of the oxidized films.

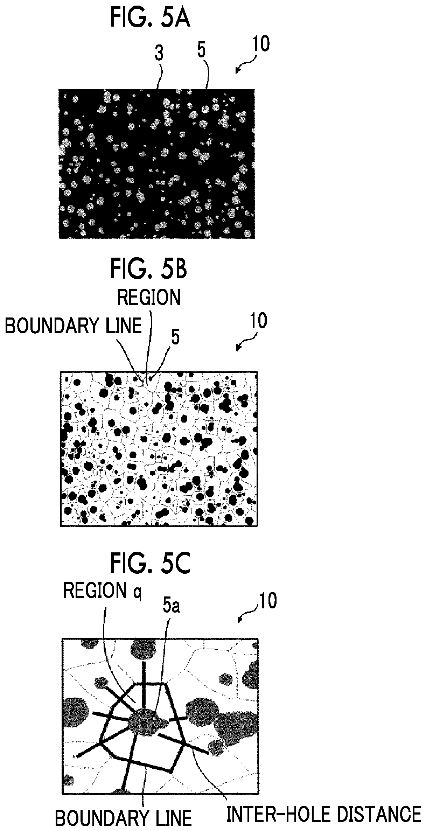

FIG. 5A is a view illustrating a part of a surface of the aluminum plate captured using an optical microscope, FIG. 5B is a view illustrating FIG. 5A that has been converted by means of binarization and Voronoi-treated, and FIG. 5C is an enlarged view of a part of FIG. 5B in order to describe an inter-hole distance.

### DESCRIPTION OF THE PREFERRED EMBODIMENTS

Hereinafter, the present invention will be described in detail.

In the following description, there are cases in which constitutional requirements will be described on the basis of typical embodiments of the present invention, but the present invention is not limited to the above-described embodiments.

Meanwhile, in the present specification, numeric ranges expressed using "to" include numeric values before and after "to" as the lower limit value and the upper limit value.

### [Aluminum plate]

An aluminum plate of the present invention is an aluminum plate having a plurality of through holes that penetrate in a thickness direction, in which an average opening diameter of the through holes is 1 µm to 100 µm, a density of the through holes is 50 through holes/mm² to 2,000 through holes/mm², and the maximum value of the inter-hole distance between adjacent through holes is 300 µm or less, wherein the aluminum plate having a plurality of through holes is obtainable by carrying out the following steps:
an oxidized film-forming step of forming an oxidized film by carrying out an oxidized film-forming treatment on the surface of an aluminum substrate,
a through hole-forming step of forming through holes by carrying out an electrochemical dissolution treatment after the oxidized film-forming step, and
an oxidized film-removing step of removing the oxidized film from the aluminum plate.

Next, the constitution of the aluminum plate of the present invention will be described using FIGS. 1A to 1C.

FIG. 1A is a schematic top view illustrating an example of a preferred embodiment of the aluminum plate of the present invention, FIG. 1B is a sectional view in a direction of the B-B line in FIG. 1A, and FIG. 1C is a schematic sectional view illustrating an example of an electrode in which an aluminum plate 10 illustrated in FIG. 1A is used as a collector for storage devices.

As illustrated in FIGS. 1A and 1B, the aluminum plate 10 is obtained by forming a plurality of through holes 5 that penetrate in the thickness direction on an aluminum substrate 3 as specified in claim 1.

In addition, an electrode 30 illustrated in FIG. 1C is obtained by laminating an active material layer 32 on one main surface of the aluminum plate 10 illustrated in FIG. 1B.

A plurality of the through holes 5 formed in the aluminum substrate 3 have an average opening diameter of 1 µm to 100 µm, a number density of 50 through holes/mm² to 2,000 through holes/mm², and the maximum value of the inter-hole distance between adjacent through holes is 300 µm or less.

Here, the average opening diameter of the through holes is obtained by capturing an image of the surface of the aluminum plate using a high-resolution scanning electron microscope (SEM) at a magnification of 100 times, extracting at least 20 through holes having a circumference that continues in a ring shape from the obtained SEM image, scanning the maximum values of the distances between the end portions of the opening portions of the through holes as the opening diameters, and computing the average value thereof as the average opening diameter.

That is, since the shape of the opening portion of the through hole is not limited to a substantial circle shape, in a case in which the shape of the opening portion is not a circle shape, the maximum value of the distances between the end portions of the through hole portion is considered as the opening diameter. Therefore, for example, in the case of a through hole having a shape in which two or more through holes are integrated together, this through hole is considered as one through hole, and the maximum value of the distances between the end portions of the through hole portion is considered as the opening diameter.

In addition, the density (number density) of the through holes is obtained by installing a parallel light optical unit on one surface side of the aluminum plate, transmitting parallel light, capturing an image of the surface of the aluminum plate using an optical microscope at a magnification of 100 times on the other surface side of the aluminum plate so as to obtain a photograph as illustrated in FIG. 5A, counting the number of through holes at five 100 mm×75 mm visual fields in a 10 cm×10 cm range of the obtained photograph, calculating the number of through holes per square millimeter, and considering the average value of the values measured at the respective visual fields (five places) as the density of the through holes.

In addition, the inter-hole distance is obtained by installing a parallel light optical unit on one surface side of the aluminum plate, transmitting parallel light, capturing an image of the surface of the aluminum plate using an optical microscope at a magnification of 100 times on the other surface side of the aluminum plate so as to obtain a photograph as illustrated in FIG. 5A, binarizing ten 100 mm×75 mm visual fields in a 10 cm×10 cm range of the obtained photograph using image analysis software or the like, then, carrying out a Voronoi treatment, drawing a boundary line between the through holes, and obtaining an image as illustrated in FIG 5B.

Here, the Voronoi treatment refers to a treatment in which, in a case in which several points are disposed on a plane, the inside of the plane is divided into a plurality of regions depending on the closest point, and lines dividing regions serve as boundary lines. That is, this boundary line is a line formed of a collection of points at the same distance from two closest points. In addition, regions are formed in accordance with the respective points.

Meanwhile, in the present invention, a line at the same distance from the closest locations of two through holes is considered as the boundary line.

In an image on which the Voronoi treatment has been carried out, through holes corresponding to adjacent regions are considered as adjacent through holes. For example, in the example illustrated in FIG. 5C, the region q corresponding to the through hole 5a in the center of the drawing is adjacent to seven regions. Therefore, the through hole 5a is adjacent to seven through holes.

For two adjacent through holes, lines perpendicular to boundary lines are drawn from the respective end surfaces, and the length of the line having the shortest length is considered as the inter-hole distance.

All inter-hole distances in a 100 mm×75 mm visual field are measured. In ten visual fields, all of the inter-hole distances are measured, and the average value thereof is computed as the average inter-hole distance.

As described above, the aluminum plate having a number of through holes is used as a collector constituting electrodes in lithium ion capacitors and the like. The through holes are formed in order to facilitate the migration of lithium ions when the lithium ions are pre-doped.

In addition, the above-described aluminum plate is used as an electrode after being coated with an active material such as activated charcoal. At this time, a decrease in the diameters of the through holes is considered in order to improve the coating properties of the active material.

However, the present inventors carried out detailed studies and consequently found that, even when a number of fine through holes are formed, there are cases in which efficient pre-doping is impossible.

Specifically, it was found that, when there are regions in which the inter-hole distance between adjacent through holes is far, it becomes difficult for lithium ions to arrive at the vicinity of the regions, and thus a long time is taken until the completion of pre-doping, and it is not possible to efficiently carry out pre-doping. That is, it was found that, when the through holes are unevenly distributed, the diffusivity of lithium ions becomes poor, and the pre-doping characteristics become poor.

In contrast, in the present invention, when the average opening diameter of the through holes is set to a fine diameter of 1 µm to 100 µm, the generation of protrusions and recesses on the surface of the active material applied onto the aluminum plate or the active material being bled through is prevented, and the coating properties can be improved. In addition, when the density of the fine through holes having an average opening diameter of 1 µm to 100 µm is set to 50 through holes/mm² to 2,000 through holes/mm², and the maximum value of the inter-hole distance between adjacent through holes is set to 300 µm or less, thereby forming the above-described fine through holes in a sufficient opening ratio and a uniform distribution, it is possible to decrease the number of regions at which lithium ions do not easily arrive by improving the diffusivity of lithium ions during pre-doping and improve the efficiency of pre-doping by shortening the time taken until the completion of pre-doping.

Meanwhile, as the average opening diameter of the through holes decreases, the adhesiveness to the active material degrades. On the other hand, as the average opening diameter increases, the coating properties or the tensile strength degrade.

Therefore, the average opening diameter of the through holes is preferably more than 5 µm and 80 µm or less, more preferably more than 5 µm and 40 µm or less, and particularly preferably 10 µm to 30 µm from the viewpoint of the coating properties, the adhesiveness to the active material, the tensile strength, and the like.

In addition, as the density of the through holes decreases, the pre-doping characteristics or the adhesiveness degrades. On the other hand, as the density increases, the tensile strength decreases.

Therefore, the density of the through holes is preferably 100 through holes/mm² to 2,000 through holes/mm², more preferably 150 through holes/mm² to 1,500 through holes/mm², and particularly preferably 200 through holes/mm² to 1,000 through holes/mm² from the viewpoint of the pre-doping properties, the adhesiveness, the tensile strength, and the like.

In addition, as the maximum value of the inter-hole distance increases, the pre-doping characteristics degrade.

Therefore, the maximum value of the inter-hole distance is preferably 250 µm or less, more preferably 200 µm or less, and particularly preferably 100 µm or less from the viewpoint of the pre-doping characteristics.

In addition, as the average value of the inter-hole distance increases, the pre-doping characteristics degrade.

Therefore, the average value of the inter-hole distances is preferably 150 µm or less and more preferably 80 µm or less from the viewpoint of the pre-doping characteristics.

In addition, the percentage of the through holes having an opening diameter of 5 µm or less is preferably 50% or less and more preferably 40% or less. When the percentage of the through holes having an opening diameter of 5 µm or less is set to 50% or less, the pre-doping characteristics, the adhesiveness, and the coating properties can be further improved.

Meanwhile, the percentage of the through holes having an opening diameter of 5 µm or less is obtained by capturing a SEM photograph using the same method as in the measurement of the average opening diameter of the through holes, measuring the opening diameters of all of the through holes at five 30 mm×30 mm visual fields in a 10 cm×10 cm range of the obtained photograph, and computing the percentage of the number of through holes having an opening diameter of 5 µm or less in the number of all of the measured through holes.

In addition, the surface of the aluminum plate 10 may be coarsened, and recess portions having an average opening diameter of 0.5 µm to 3.0 µm are preferably formed at a density of 10 recess portions or more/100 µm². When the surface of the aluminum plate is roughened, the adhesiveness to the active material layer improves, and an increase in the surface area increases the contact area, and thus the capacity maintenance rate of storage devices in which the aluminum plate (collector) is used increases.

Meanwhile, the treatment method for roughening is not particularly limited, and well-known roughening treatment methods can be appropriately used. For example, the surface is preferably roughened by means of an electrochemical roughening treatment described below.

In addition, in the example illustrated in FIG. 1B, a plurality of the through holes 5 are formed in the aluminum substrate 3, but the present invention is not limited thereto, and the aluminum plate may also have a metal layer made of a metal plate covering at least the inner surfaces of the through holes.

FIG. 2 is a schematic sectional view illustrating another example of the aluminum plate of the present invention.

The aluminum plate 10 illustrated in FIG. 2 has a first metal layer 6 and a second metal layer 7, which are made of metal other than aluminum or an alloy, on the front surface and rear surface of the aluminum substrate 3 having the through holes and the inner surfaces (inner walls) of the through holes 5.

As described above, when the metal layer is formed on the inner surfaces of the through holes, it is possible to preferably adjust the average opening diameter of the through holes in a narrow range of approximately 1 µm to 20 µm.

The above-described metal layer can be formed by means of a metal coating step described below.

Meanwhile, in the example illustrated in the drawing, the metal layer is formed on the front surface and rear surface of the aluminum substrate 3 and the inner surfaces of the through holes 5, but the constitution is not limited thereto, and the metal layer may be only formed on at least the inner surfaces of the through holes 5.

In addition, in the example illustrated in the drawing, the through holes 5 are formed on the entire surface of the aluminum substrate 3, but the constitution is not limited thereto, and there may be regions in which the through holes 5 are not formed.

Meanwhile, the percentage of regions in which the through holes satisfying the ranges of the average opening diameter, the density, and the maximum inter-hole distance are formed is preferably 80% or more and more preferably 90% or more of the area of the main surface of the aluminum substrate.

In addition, the through holes 5 are preferably formed in regions coated with at least the active material. In regions in which a plurality of the through holes 5 are formed, the through holes 5 to be formed need to satisfy the ranges of the average opening diameter, the density, and the inter-hole distance.

### <Aluminum substrate>

The aluminum substrate is not particularly limited, and it is possible to use well-known aluminum substrates, for example, alloy Nos. 1085, 1N30, 3003, and the like described in JIS Standards H4000. Meanwhile, the aluminum substrate is an alloy plate including aluminum as a main component and a small amount of foreign elements.

The thickness of the aluminum substrate is not particularly limited, but is preferably 5 µm to 1,000 µm, more preferably 10 µm to 100 µm, and particularly preferably 10 µm to 30 µm.

### <Active material layer>

The active material layer is not particularly limited, and it is possible to use well-known active material layers that are used in storage devices of the related art.

Specifically, regarding conductive materials, binders, solvents, and the like which the active material and the active material layer may include in a case in which the aluminum plate is used as a collector for positive electrodes, it is possible to appropriately employ materials described in Paragraphs "0077" to "0088" of JP2012-216513A, the content of which is incorporated into the present specification by reference.

In addition, regarding active materials in a case in which the aluminum plate is used as a collector for negative electrodes, it is possible to appropriately employ materials described in Paragraph "0089" of JP2012-216513A, the content of which is incorporated into the present specification by reference.

### [Storage device]

Electrodes in which the aluminum plate of the present invention is used as a collector can be used as positive electrodes or negative electrodes in storage devices.

Here, regarding the specific constitution or applications of storage devices (particularly, secondary batteries), it is possible to appropriately employ materials or applications described in Paragraphs "0090" to "0123" of JP2012-216513A.

In addition, in the example illustrated in FIG. 1C, the aluminum plate of the present invention is used as a collector, but the aluminum plate of the present invention can also be used in other applications. For example, the aluminum plate can be preferably used in heat-resistant fine particle filters, acoustic absorption materials, and the like.

### [Method for manufacturing aluminum plate]

Next, a method for manufacturing an aluminum plate of the present invention will be described.

The method for manufacturing an aluminum plate is a method for manufacturing an aluminum plate having an aluminum substrate having a plurality of through holes in the thickness direction, including an oxidized film-forming step of forming an oxidized film by carrying out an oxidized film-forming treatment on the surface of the aluminum substrate, a through hole-forming step of forming through holes by carrying out an electrochemical dissolution treatment (hereinafter, also abbreviated as "the electrolytic dissolution treatment") after the oxidized film-forming step, and an oxidized film-removing step of removing the oxidized film from the aluminum plate.

In the present invention, since the manufacturing method includes the oxidized film-forming step, the through hole-forming step, and the oxidized film-removing step, fine through holes having an average opening diameter of 1 µm to 100 µm can be formed in a uniform distribution, and thus it is possible to manufacture aluminum plates which are favorable in terms of pre-doping characteristics and the coating properties of active materials and can be preferably used in collectors.

Next, the respective steps of the method for manufacturing an aluminum plate will be described using FIGS. 3A to 3E and 4A to 4E, and then the respective steps will be described in detail.

FIGS. 3A to 3E and 4A to 4E are schematic sectional views illustrating examples of a preferred embodiment of the method for manufacturing an aluminum plate.

The method for manufacturing an aluminum plate is, as illustrated in FIGS. 3A to 3E and 4A to 4E, a manufacturing method including an oxidized film-forming step (FIG. 3A and FIG. 3B and FIG. 4A and FIG. 4B) of forming the oxidized film 2 by carrying out an oxidized film-forming treatment on the surface (the front surface and the rear surface in the aspect illustrated in FIG. 4) of the aluminum substrate 1, a through hole-forming step (FIG. 3B and FIG. 3C and FIG. 4B and FIG. 4C) of forming the through holes 5 by carrying out an electrolytic dissolution treatment after the oxidized film-forming step, thereby producing an aluminum plate having the aluminum substrate 3 having the through holes and the oxidized film 4 having the through holes, and an oxidized film-removing step (FIG. 3C and FIG. 3D and FIG. 4C and FIG. 4D) of removing the oxidized film 4 having the through holes after the through hole-forming step, thereby producing the aluminum plate 10 made of the aluminum substrate 3 having the through holes.

In addition, the method for manufacturing an aluminum plate preferably has a roughening treatment step (FIG. 3D and FIG. 3E and FIG. 4D and FIG. 4E) of carrying out an electrochemical roughening treatment on the aluminum substrate 3 having the through holes, thereby producing the aluminum plate 10 having a roughened surface after the oxidized film-removing step.

### [Oxidized film-forming step]

In the present invention, the oxidized film-forming step that the method for manufacturing an aluminum plate has is a step of forming an oxidized film by carrying out an oxidized film-forming treatment on the surface of the aluminum substrate.

### <Oxidized film-forming treatment>

The above-described oxidized film-forming treatment is not particularly limited, and it is possible to carry out, for example, the same treatment as well-known anodization of the related art.

As the anodization, it is possible to employ, for example, conditions or devices described in Paragraphs "0063" to "0073" of JP2012-216513A.

In the present invention, the conditions of anodization vary in diverse manners depending on electrolytic solutions being used and thus cannot be determined uniformly; however, generally, the concentration of an electrolytic solution in a range of 1% by mass to 80% by mass, the liquid temperature in a range of 5°C to 70°C, the current density in a range of 0.5 A/dm² to 60 A/dm², the voltage in a range of 1 V to 100 V, and the electrolysis duration in a range of 1 second to 20 minutes are appropriate and are adjusted so as to obtain a desired amount of oxidized film.

In the present invention, anodization which is carried out in a sulfuric acid solution is preferred.

In a case in which anodization is carried out in an electrolytic solution containing sulfuric acid, direct current or alternating current may be applied between the aluminum substrate and a counter electrode. In a case in which direct current is applied to the aluminum substrate, the current density is preferably 1 A/dm² to 60 A/dm² and more preferably in a range of 5 A/dm² to 40 A/dm². In a case in which anodization is carried out continuously, the anodization is preferably carried out using a liquid power feeding method in which power is fed to the aluminum substrate through an electrolytic solution.

In the present invention, the amount of the oxidized film being formed by means of anodization is preferably in a range of 0.05 g/m² to 50 g/m² and more preferably in a range of 0.1 g/m² to 10 g/m².

### [Through hole-forming step]

The through hole-forming step is a step in which an electrolytic dissolution treatment is carried out after the oxidized film-forming step, thereby forming through holes.

### <Electrolytic dissolution treatment>

The above-described electrolytic dissolution treatment is not particularly limited, and it is possible to use direct current or alternating current and use an acidic solution as an electrolytic solution. Among acidic solutions, an electrolytic solution including hydrochloric acid or nitric acid as a main body is preferably used.

In the present invention, as the acidic solution which is the electrolytic solution, it is possible to use, in addition to nitric acid and hydrochloric acid, electrolytic solutions described in the respective specifications of US4,671,859A, US4,661,219A, US4,618,405A, US4,600,482A, US4,566,960A, US4,566,958A, US4,566,959A, US4,416,972A, US4,374,710A, US4,336,113A, and US4,184,932A.

The concentration of the acidic solution is preferably in a range of 0.5% by mass to 2.5% by mass and more preferably in a range of 0.7% by mass to 2.0% by mass. In addition, the liquid temperature of the acidic solution is preferably in a range of 20°C to 80°C and more preferably in a range of 30°C to 60°C.

In addition, as an aqueous solution including hydrochloric acid or nitric acid as a main body, it is possible to use an aqueous solution obtained by adding at least one of a nitric acid compound having nitric acid ions such as aluminum nitrate, sodium nitrate, or ammonium nitrate or a hydrochloric acid compound having hydrochloric acid ions such as aluminum chloride, sodium chloride, or ammonium chloride to an aqueous solution of hydrochloric acid or nitric acid which has a concentration of 1 g/L to 100 g/L so as to obtain a concentration in a range of 1 g/L to saturation.

In addition, the aqueous solution including hydrochloric acid or nitric acid as the main body may contain metals which are included in an aluminum alloy such as iron, copper, manganese, nickel, titanium, magnesium, and silica. A liquid obtained by adding aluminum chloride, aluminum nitrate, or the like to an aqueous solution of hydrochloric acid or nitric acid having a concentration in a range of 0.5% by mass to 2% by mass so that the concentration of aluminum ions falls in a range of 3 g/L to 50 g/L is preferably used.

In the electrochemical dissolution treatment, direct current is mainly used; however, in a case in which alternating current is used, the alternating-current power source wave is not particularly limited, and a sine wave, a square wave, a trapezoidal wave, a triangular wave, and the like can be used, and, among these, a square wave or a trapezoidal wave is preferred, and a trapezoidal wave is particularly preferred.

### (Nitric acid electrolysis)

In the present invention, it is possible to easily form through holes which have an average opening diameter in a range of 1 µm to 100 µm and an average opening ratio in a range of 1% to 40% by means of an electrochemical dissolution treatment in which an electrolytic solution including nitric acid as a main body is used (hereinafter, also abbreviated as "the nitric acid dissolution treatment").

Here, the nitric acid dissolution treatment is preferably an electrolytic treatment which is carried out using direct current under conditions of an average current density set to 5 A/dm² or higher and a quantity of electricity set to 50 C/dm² or greater since it is easy to control dissolution points of through hole formation. Meanwhile, the average current density is preferably 100 A/dm² or lower, and the quantity of electricity is preferably 10,000 C/dm² or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

### (Hydrochloric acid electrolysis)

In the present invention, it is also possible to easily form through holes which have an average opening diameter in a range of 1 µm to 100 µm and an average opening ratio in a range of 1% to 40% by means of an electrochemical dissolution treatment in which an electrolytic solution including hydrochloric acid as a main body is used (hereinafter, also abbreviated as "the hydrochloric acid dissolution treatment").

Here, the hydrochloric acid dissolution treatment is preferably an electrolytic treatment which is carried out using direct current under conditions of an average current density set to 5 A/dm² or higher and a quantity of electricity set to 50 C/dm² or greater since it is easy to control dissolution points of through hole formation. Meanwhile, the average current density is preferably 100 A/dm² or lower, and the quantity of electricity is preferably 10,000 C/dm² or less.

In addition, the hydrochloric acid concentration or temperature of the electrolytic solution is not particularly limited, and it is possible to carry out electrolysis using a hydrochloric acid electrolytic solution having a high concentration, for example, a hydrochloric acid concentration in a range of 10% by mass to 35% by mass at 30°C to 60°C or carry out electrolysis using a hydrochloric acid electrolytic solution having a hydrochloric acid concentration in a range of 0.7% by mass to 2% by mass at a high temperature, for example, at 80°C or higher.

Here, in the present invention, the electrolytic dissolution treatment in the through hole-forming step is preferably carried out in two or more stages with different current densities. In a case in which the electrolytic dissolution treatment is carried out in two stages, first, the electrolytic dissolution treatment is carried out at a high current density, and then the electrolytic dissolution treatment is carried out at a lower current density than the above-described current density. In such a case, it is possible to form a number of through holes having a small opening diameter.

### [Oxidized film-removing step]

The oxidized film-removing step is a step of removing the oxidized film.

In the oxidized film-removing step, the oxidized film can be removed by carrying out, for example, an acid etching treatment or an alkali etching treatment which will be described below.

### <Acid etching treatment>

The above-described dissolution treatment is a treatment in which the oxidized film is dissolved using a solution that dissolves the oxidized film (aluminum oxide) earlier than aluminum (hereinafter, referred to as "the alumina dissolution liquid").

Here, the alumina dissolution liquid is preferably an aqueous solution including at least one selected from a group consisting of, for example, chromium compounds, nitric acid, sulfuric acid, phosphoric acid, zirconium-based compounds, titanium-based compounds, lithium salts, cerium salts, magnesium salts, sodium silicofluoride, zinc fluoride, manganese compounds, molybdenum compounds, magnesium compounds, barium compounds, and halogen single bodies.

Specific examples of the chromium compounds include chromium (III) oxide, anhydrous chromium (VI) acid, and the like.

Examples of the zirconium-based compounds include ammonium fluorozirconate, zirconium fluoride, and zirconium chloride.

Examples of the titanium-based compounds include titanium oxide and titanium sulfide.

Examples of the lithium salts include lithium fluoride and lithium chloride.

Examples of the cerium salts include cerium fluoride and cerium chloride.

Examples of the magnesium salts include magnesium sulfide.

Examples of the manganese compounds include sodium permanganate and calcium permanganate.

Examples of the molybdenum compounds include sodium molybdate.

Examples of the magnesium compounds include magnesium fluoride·pentahydrate.

Examples of the barium compounds include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, hydrates thereof, and the like.

Among the above-described barium compounds, barium oxide, barium acetate, and barium carbonate are preferred, and barium oxide is particularly preferred.

Examples of the halogen single bodies include chlorine, fluorine, and bromine.

Among these, the alumina dissolution liquid is preferably an aqueous solution containing an acid, examples of the acid include sulfuric acid, phosphoric acid, nitric acid, hydrochloric acid, and the like, and the acid may be a mixture of two or more acids.

The concentration of the acid is preferably 0.01 mol/L or higher, more preferably 0.05 mol/L or higher, and still more preferably 0.1 mol/L or higher. There is no particular upper limit, and the upper limit is generally 10 mol/L or lower and more preferably 5 mol/L or lower.

The dissolution treatment is carried out by bringing the aluminum substrate on which the oxidized film is formed into contact with the above-described alumina dissolution liquid. A method for bringing the aluminum substrate into contact with the alumina dissolution liquid is not particularly limited, and examples thereof include a dipping method and a spraying method. Among these, the dipping method is preferred.

The dipping method is a treatment in which the aluminum substrate on which the oxidized film is dipped into the above-described alumina dissolution liquid. During the dipping treatment, it is preferable to carry out stirring since the treatment is carried out evenly.

The duration of the dipping treatment is preferably 10 minutes or longer, more preferably one hour or longer, and still more preferably three hours or longer and five hours or shorter.

### <Alkali etching treatment>

The alkali etching treatment is a treatment in which the surface layer is dissolved by bringing the oxidized film into contact with an alkali solution.

Examples of alkalis that can be used in the alkali solution include caustic alkalis and alkali metal salts. Specific examples of caustic alkalis include caustic soda and caustic potash. In addition, examples of alkali metal salts include alkali metal silicates such as sodium metasilicate, sodium silicate, potassium metasilicate, and potassium silicate; alkali metal carbonates such as sodium carbonate and potassium carbonate; alkali metal aluminate such as sodium aluminate and potassium aluminate; alkali metal aldonates such as sodium gluconate and potassium gluconate; and alkali metal hydrogenphosphate such as sodium diphosphate, potassium diphosphate, sodium triphosphate, and potassium triphosphate. Among these, solutions of caustic alkalis and solutions containing both caustic alkali and alkali metal aluminate are preferred from the viewpoint of the fast etching rates and the cheap prices. Particularly, an aqueous solution of caustic soda is preferred.

The concentration of the alkali solution is preferably in a range of 0.1% by mass to 50% by mass and more preferably in a range of 0.5% by mass to 10% by mass. In a case in which the alkali solution has aluminum ions dissolved therein, the concentration of aluminum ions is preferably in a range of 0.01% by mass to 10% by mass and more preferably in a range of 0.1% by mass to 3% by mass. The temperature of the alkali solution is preferably in a range of 10°C to 90°C. The treatment duration is preferably in a range of 1 second to 120 seconds.

Examples of a method for bringing the oxidized film into contact with the alkali solution include a method in which the aluminum substrate on which the oxidized film is formed is passed through a tank including the alkali solution, a method in which the aluminum substrate on which the oxidized film is formed is immersed in a tank including the alkali solution, and a method in which the alkali solution is sprayed to the surface (the oxidized film) of the aluminum substrate on which the oxidized film is formed.

### [Roughening treatment step]

In the present invention, the arbitrary roughening treatment step which the method for manufacturing an aluminum plate may have is a step of roughening the front surface or the rear surface of the aluminum substrate by carrying out an electrochemical roughening treatment (hereinafter, also abbreviated as "the electrolytic roughening treatment") on the aluminum substrate from which the oxidized film is removed.

When the electrolytic roughening treatment is carried out and the surface of the aluminum substrate is roughened as described above, adhesiveness to layers including active material improves, and an increase in the surface area leads to an increase in the contact area, and thus the capacity maintenance rate of storage devices in which aluminum plates (collectors) obtained using the manufacturing method of the present invention are used enhance.

In the electrolytic roughening treatment, it is possible to appropriately employ, for example, conditions or devices described in Paragraphs "0041" to "0050" of JP2012-216513A.

### <Nitric acid electrolysis>

In the present invention, it is possible to easily form recessed portions having an average opening diameter in a range of 0.5 µm to 3.0 µm at a density of 10 recess portions/100 µm² or higher by means of an electrochemical roughening treatment in which an electrolytic solution including nitric acid as a main body is used (hereinafter, also abbreviated as "the nitric acid electrolysis").

Here, the nitric acid electrolysis is preferably an electrolytic treatment which is carried out using alternating current under conditions of a peak current density set to 30 A/dm² or higher, an average current density set to 13 A/dm² or higher, and a quantity of electricity set to 150 C/dm² or greater since it becomes possible to form uniform recessed portions at a high density. Meanwhile, the peak current density is preferably 100 A/dm² or lower, the average current density is preferably 40 A/dm² or lower, and the quantity of electricity is preferably 400 C/dm² or less.

In addition, the concentration or temperature of the electrolytic solution in the nitric acid electrolysis is not particularly limited, and it is possible to carry out electrolysis using a nitric acid electrolytic solution having a high concentration, for example, a nitric acid concentration in a range of 15% by mass to 35% by mass at 30°C to 60°C or carry out electrolysis using a nitric acid electrolytic solution having a nitric acid concentration in a range of 0.7% by mass to 2% by mass at a high temperature, for example, at 80°C or higher.

### <Hydrochloric acid electrolysis>

In the present invention, it is possible to form recessed portions having an average opening diameter in a range of 0.5 µm to 3.0 µm at a density of 10 recess portions/100 µm² or higher by means of an electrochemical roughening treatment in which an electrolytic solution including hydrochloric acid as a main body is used (hereinafter, also abbreviated as "the hydrochloric acid electrolysis").

Here, the hydrochloric acid electrolysis is preferably an electrolytic treatment which is carried out using alternating current under conditions of a peak current density set to 30 A/dm² or higher, an average current density set to 13 A/dm² or higher, and a quantity of electricity set to 150 C/dm² or greater since it becomes possible to form uniform recessed portions at a high density. Meanwhile, the peak current density is preferably 100 A/dm² or lower, the average current density is preferably 40 A/dm² or lower, and the quantity of electricity is preferably 400 C/dm² or less.

### [Metal coating step]

In the present invention, the method for manufacturing an aluminum plate preferably has a metal coating step in which part or all of the surfaces of the aluminum substrate including at least the inner walls of the through holes are coated with a metal other than aluminum after the above-described oxidized film-removing step since it is possible to adjust the average opening diameter of the through holes formed by means of the above-described electrolytic dissolution treatment to be small in a range of approximately 0.1 µm to 20 µm.

Here, "part or all of the surfaces of the aluminum substrate including at least the inner walls of the through holes are coated with a metal other than aluminum" means that, out of all the surfaces of the aluminum substrate including the inner walls of the through holes, at least the inner walls of the through holes are coated, and the surfaces other than the inner walls may not be coated or may be wholly or partially coated.

Hereinafter, the metal coating step will be described using FIG. 2.

As described above, the aluminum plate 10 illustrated in FIG. 2 is an aspect in which first metal layers 6 and second metal layers 7 which are made of metals other than aluminum or alloys are provided on the front surface and the rear surface of the aluminum substrate 3 having the through holes and the inner walls of the through holes and can be produced by carrying out, for example, a substitution treatment and a plating treatment, which will be described below, on the aluminum substrate illustrated in FIGS. 3D or 4D.

### <Substitution treatment>

The substitution treatment is a treatment in which part or all of the surfaces of the aluminum substrate including at least the inner walls of the through holes are immersion-plated with zinc or a zinc alloy.

Examples of an immersion plating liquid include a mixed solution of 120 g/l of sodium hydroxide, 20 g/l of zinc oxide, 2 g/l of crystalline ferric chloride, 50 g/l of potassium sodium tartrate, and 1 g/l of sodium nitrate, and the like.

In addition, commercially available Zn or Zn alloy plating liquid may be used, and, for example, SUB STAR Zn-1, Zn-2, Zn-3, Zn-8, Zn-10, Zn-111, Zn-222, Zn-291, and the like, all manufactured by Okuno Chemical Industries Co., Ltd., can be used.

The immersion duration of the aluminum substrate in the above-described immersion plating liquid is preferably in a range of 15 seconds to 40 seconds, and the immersion temperature is preferably in a range of 15 seconds to 40 seconds.

### <Plating treatment>

In a case in which a zinc coating is formed by immersion-plating the surfaces of the aluminum substrate with zinc or an zinc alloy by means of the above-described substitution treatment, it is preferable to carry out, for example, a plating treatment in which the zinc coating is substituted with nickel by means of electroless plating described below and then a variety of metals are precipitated by means of electrolytic plating described blow.

### (Electroless plating treatment)

As a nickel plating liquid that is used in an electroless plating treatment, it is possible to use a broad range of commercially available products, and examples thereof include an aqueous solution including 30 g/l of nickel sulfate, 20 g/l of sodium phosphinate, and 50 g/l of ammonium citrate, and the like.

In addition, examples of a nickel alloy plating liquid include Ni-P alloy plating liquids in which a phosphorus compound serves as a reducing agent, Ni-B plating liquids in which a boron compound serves as a reducing agent, and the like.

The immersion duration in the above-described nickel plating liquid or nickel alloy plating liquid is preferably in a range of 15 seconds to 10 minutes, and the immersion temperature is preferably in a range of 30°C to 90°C.

### (Electrolytic plating treatment)

In a case in which, for example, electroplating of Cu is carried out as an electrolytic plating treatment, a plating liquid is, for example, a plating liquid obtained by adding 60 g/L to 110 g/L of copper sulfate, 160 g/L to 200 g/L of sulfuric acid, and 0.1 mL/L to 0.15 mL/L of hydrochloric acid to pure water and further adding 1.5 mL/L to 5.0 mL/L of TOP LUCINA SF base WR, 0.5 mL/L to 2.0 mL/L of TOP LUCINA SF-B, and 3.0 mL/L to 10 mL/L of TOP LUCINA SF leveller, all manufactured by Okuno Chemical Industries Co., Ltd., thereto as additives.

The immersion duration in the above-described copper plating liquid is not particularly limited since the immersion duration is dependent on the thickness of a Cu film, and, in a case in which, for example, a 2 µm-thick Cu film is formed, the aluminum substrate is preferably immersed in the plating liquid for approximately five minutes at a current density of 2 A/dm², and the immersion temperature is preferably in a range of 20°C to 30°C.

### [Boehmite treatment]

In the present invention, in the method for manufacturing an aluminum plate, it is preferable to carry out a boehmite treatment after the oxidized film is formed by further carrying out anodization after the above-described oxidized film-removing step since it is possible to adjust the average opening diameter of the through holes formed by means of the above-described electrolytic dissolution treatment to be small in a range of approximately 1 µm to 20 µm.

Here, in the boehmite treatment, a reaction in which aluminum reacts with high-temperature water or superheated steam so as to generate a pseudoboehmite hydrated oxide coating is used, and it is possible to generate a hydrated oxide coating by, for example, adjusting the pH of water (for example, pure water or deionized water) (100°C to 400°C) to be 7 to 12 and immersing the aluminum substrate therein.

### [Water washing treatment]

In the present invention, it is preferable to carry out water washing after the completion of the steps of the respective treatments described above. In the water washing, it is possible to use pure water, well water, tap water, or the like. In order to prevent the treatment liquids from being carried to the subsequent steps, a nipping device may be used.

### EXAMPLES

Hereinafter, the present invention will be described in more detail on the basis of examples. Materials, amounts used, fractions, treatment contents, treatment orders, and the like described in the following examples can be appropriately modified within the scope of the gist of the present invention. Therefore, the scope of the present invention should not be interpreted in a limited manner by the examples described below.

### [Example 1]

### <Production of aluminum plate for collector>

A treatment which will be described below was carried out on the surface of an aluminum substrate having an average thickness of 20 µm and a size of 200 mm×300 mm (JIS H-4160, alloy number: 1N30-H, aluminum purity: 99.30%), thereby producing an aluminum plate for a collector.

### (a1) Oxidized film-forming treatment (oxidized film-forming step)

Direct-current voltage of 3 V was applied to the aluminum substrate for 27 seconds at a direct current density of 5 A/dm² under a condition of 52°C using a solution having an aluminum concentration of 5% or lower and the aluminum substrate as an anode at a sulfuric acid concentration of 170 g/L, thereby forming an oxidized film (the amount of the coating: 0.6 g/m²) on a single-side surface (single surface) of the aluminum substrate. After that, water washing was carried out by means of spraying.

### (b1) Electrolytic dissolution treatment (through hole-forming step)

Next, an electrolytic treatment was carried out under conditions of a current density of 60 A/dm², the sum of the quantities of electricity being 200 C/dm² using an electrolytic solution (nitric acid concentration: 1%, aluminum concentration: 4.5 g/L) which was held at 50°C and the aluminum substrate as an anode, and furthermore, another electrolytic treatment was carried out under changed conditions of a current density of 10 A/dm², the sum of the quantities of electricity being 1,200 C/dm², thereby forming through holes in the aluminum substrate and the oxidized film. Meanwhile, the electrolytic treatment was carried out using direct-current power source waves.

After that, the aluminum substrate and the oxidized film were washed with water by means of spraying and were dried.

### (c1) Removal treatment of oxidized films (oxidized film-removing step)

Next, the aluminum substrate that had been subjected to the electrolytic dissolution treatment was immersed in an aqueous solution (liquid temperature: 35°C) having a caustic soda concentration of 5% by mass and an aluminum ion concentration of 0.5% by mass for three seconds, thereby dissolving and removing the oxidized film.

After that, the aluminum substrate was washed with water by means of spraying and was dried, thereby producing an aluminum plate having through holes.

### [Example 2]

Through holes were formed in an aluminum substrate and an oxidized film under the electrolytic treatment conditions for (b1) in which the current density was changed to 10 A/dm² and the sum of the quantities of electricity was changed to 1,800 C/dm². An aluminum plate was produced in the same manner as in Example 1 except for the fact that the conditions for the electrolytic dissolution treatment were changed.

### [Example 3]

An aluminum plate was produced in the same manner as in Example 1 except for the fact that, regarding the electrolytic treatment conditions for (b1), the current density was changed to 10 A/dm² and the sum of the quantities of electricity was changed to 2,000 C/dm².

### [Example 4]

An aluminum plate was produced in the same manner as in Example 1 except for the fact that an oxidized film-forming treatment described in (a2) below was carried out instead of the oxidized film-forming treatment described in (a1) and an electrolytic dissolution treatment described in (b2) below was carried out instead of the electrolytic dissolution treatment described in (b1).

### (a2) Oxidized film-forming treatment

An oxidized film-forming treatment was carried out in the same manner as in the oxidized film-forming treatment (a1) except for the fact that an oxidized film (the amount of the coating: 2.4 g/m²) was formed on a surface of a single side (single surface) of the aluminum substrate by applying direct-current voltage of 15 V for 16 seconds at a direct-current density of 25 A/dm².

### (b2) Electrolytic dissolution treatment

An electrolytic dissolution treatment was carried out in the same manner as in the electrolytic dissolution treatment described in (b1) except for the fact that, regarding the electrolytic treatment conditions, the current density was changed to 10 A/dm² and the sum of the quantities of electricity was changed to 1,500 C/dm².

### [Example 5]

An aluminum plate was produced in the same manner as in Example 1 except for the fact that the oxidized film-forming treatment described in (a2) was carried out instead of the oxidized film-forming treatment described in (a1) and an electrolytic dissolution treatment described in (b3) below was carried out instead of the electrolytic dissolution treatment described in (b1).

### (b3) Electrolytic dissolution treatment

An electrolytic dissolution treatment was carried out in the same manner as in the electrolytic dissolution treatment described in (b1) except for the fact that, regarding the electrolytic treatment conditions, the current density was changed to 10 A/dm² and the sum of the quantities of electricity was changed to 2,400 C/dm².

### [Comparative Example 1]

Resist films having a predetermined pattern for producing the through holes shown in Table 1 were formed using a gravure roll on both surfaces of an aluminum substrate having an average thickness of 20 µm and a width of 200 mm (JIS H-4160, alloy number: 1N30-H, aluminum purity: 99.30%). The main component of the resist ink was made of an acrylic resin, a small amount of a pigment was blended into the resist ink, and the viscosity of the resist ink was adjusted using toluene. Next, an etching treatment was carried out for approximately ten seconds at a temperature of 40°C using an etching fluid made of ferric chloride, thereby forming the through holes shown in Table 1 in an aluminum foil. After that, the resist ink was dissolved and removed using caustic soda, thereby producing an aluminum plate.

### [Comparative Example 2]

Molten metal having a composition including Fe: 18 mass ppm, Si: 20 mass ppm, Cu: 25 mass ppm, and a remainder: Al and inevitable impurities was prepared and then solidified, thereby obtaining an ingot. Next, a homogenization treatment was carried out on this ingot at 500°C for ten hours. After that, hot rolling (temperature: 400°C) and cold rolling were carried out on the ingot, thereby rolling the ingot to a thickness of 65 µm. Process annealing was carried out at 250°C for eight hours, and then, furthermore, cold rolling was carried out, thereby obtaining a 50 µm-thick foil.

The foil was washed with an organic solvent-based washing agent (isopropylene) and then was annealed at 500°C for ten hours in argon gas. Next, direct-current etching was carried out at a liquid temperature of 70°C and a current density of 0.3 A/cm² using an aqueous solution including 5% by mass of hydrochloric acid as an electrolytic solution, thereby producing an aluminum plate having a plurality of through holes.

### [Comparative Example 3]

An aluminum plate was produced in the same manner as in Example 1 except for the fact that an aluminum substrate having an average thickness of 20 µm and a width of 200 mm (aluminum purity: 99.99%) was used as an aluminum substrate, the oxidized film-forming treatment described in (a2) was carried out instead of the oxidized film-forming treatment described in (a1), and an electrolytic dissolution treatment described in (b4) below was carried out instead of the electrolytic dissolution treatment described in (b1).

### (b4) Electrolytic dissolution treatment

An electrolytic dissolution treatment was carried out in the same manner as in the electrolytic dissolution treatment described in (b1) except for the fact that, regarding the electrolytic treatment conditions, the current density was changed to 5 A/dm² and the sum of the quantities of electricity was changed to 1,000 C/dm².

### [Comparative Example 4]

An aluminum plate was produced in the same manner as in Example 1 except for the fact that an aluminum substrate having an average thickness of 20 µm and a width of 200 mm (aluminum purity: 99.99%) was used as an aluminum substrate, the oxidized film-forming treatment described in (a2) was carried out instead of the oxidized film-forming treatment described in (a1), and an electrolytic dissolution treatment described in (b5) below was carried out instead of the electrolytic dissolution treatment described in (b1).

### (b5) Electrolytic dissolution treatment

An electrolytic dissolution treatment was carried out in the same manner as in the electrolytic dissolution treatment described in (b1) except for the fact that, regarding the electrolytic treatment conditions, the current density was changed to 10 A/dm² and the sum of the quantities of electricity was changed to 1,000 C/dm².

The average opening diameters, the densities, and the inter-hole distances of the through holes in the produced aluminum plates were measured using the following methods.

The average opening diameter was obtained by capturing an image of the surface of the aluminum plate using a high-resolution scanning electron microscope (SEM) at a magnification of 100 times, extracting at least 20 through holes having a circumference that continues in a ring shape from the obtained SEM image, scanning the opening diameters, and computing the average value thereof as the average opening diameter.

In addition, the densities of the through holes were measured in the following manner.

First, the density of the through holes was obtained by installing a parallel light optical unit (MFU-34X30-BL manufactured by CCS Inc.) on one surface side of the aluminum plate, transmitting parallel light, capturing an image of the surface of the aluminum plate using an optical microscope at a magnification of 100 times in 1392×1040 pixels on the other surface side of the aluminum plate, counting the number of through holes at ten100 mm×75 mm visual fields in the obtained optical micrograph, and computing the average value of the values measured at the respective visual fields (ten places) as the density of the through holes.

In addition, the inter-hole distance was obtained by, similar to the measurement of the hole density, installing a parallel light optical unit (MFU-34X30-BL manufactured by CCS Inc.) on one surface side of the aluminum plate, transmitting parallel light, capturing an image of the surface of the aluminum plate using an optical microscope at a magnification of 100 times in 1392×1040 pixels on the other surface side of the aluminum plate, binarizing and converting individual images of ten 100 mm×75 mm visual fields in the obtained optical photograph using image analysis software (ImageJ), and then carrying out a Voronoi treatment. Furthermore, the converted images and the Voronoi-treated images were synthesized together, thereby obtaining an image on which boundary lines were drawn between the through holes (FIG. 5B).

Next, in this image, the inter-hole distances of two adjacent through holes were all scanned, the maximum value was obtained, and the average value of the inter-hole distances was computed.

### [Evaluation]

### <Coating properties>

Active material layers were formed on both surfaces of the produced aluminum plates, and the coating properties were evaluated on the basis of the presence or absence of unevenness on the surfaces of the active material layers.

First, a slurry was prepared by adding and dispersing active charcoal powder (100 parts by mass) having a specific surface area of 1,950 m²/g as an active material, acetylene black (10 parts by mass), an acrylic binder (7 parts by mass), and carboxymethyl cellulose (4 parts by mass) to and in water.

Next, the prepared slurry was applied onto both surfaces of an aluminum plate in which through holes were formed using a die coater so as to obtain a total thickness of 200 µm and was dried at 120°C for 30 minutes, thereby forming an active material layer on the surface of the aluminum plate.

Whether or not unevenness was seen on the surface of the formed active material layer was visually evaluated, and a case in which unevenness having a diameter of 40 µm or greater was invisible was evaluated to be A, a case in which unevenness having a diameter in a range of 40 µm to 100 µm was visible was evaluated to be B, and a case in which unevenness having a diameter of 100 µm or greater was visible was evaluated to be C.

### <Pre-doping characteristics>

A pre-doping rate evaluation unit in which an electrode in which the produced aluminum plate was used as a collector was used as the positive electrode was produced, and the pre-doping characteristics were evaluated using the following method.

### (Production of positive electrode)

Conductive paint (BANIHAITO T-602 manufactured by Nippon Graphite Industries, Co., Ltd.) was applied onto both surfaces of the produced aluminum plate to a coated thickness of 10 µm and then was dried under reduced pressure at 200°C for 24 hours, thereby forming coated layers on both surfaces of the aluminum plate.

Next, a slurry for forming a positive electrode active material layer, which had been prepared in the following compositional ratio, was applied onto the formed conductive layer in an area of 14 mm×20 mm using a die coater so that the total thickness of both surfaces reached 90 µm, then, was dried under reduced pressure at 200°C for 24 hours, and then was pressed, thereby forming positive electrode active material layers on the conductive layers on both surfaces. The thickness (total thickness) of the obtained positive electrode active material layers was 72 µm.

### [Slurry for forming positive electrode active material layer]

| | |
|---|---|
| Water-based dispersion element binder "SBR BM-400B" (manufactured by Zeon Corporation) | 3% by mass |
| Carboxymethyl cellulose (CMC) sodium salt 2200 (manufactured by Daicel Corporation) | 3% by mass |
| Activated charcoal "YP-50F" (manufactured by Kuraray Chemical Co.,Ltd.) | 86% by mass |
| Conductive agent "DENKA BLACK battery-grade grain shape" (manufactured by Denka Company Limited) | 8% by mass |

### (Production of negative electrode)

A slurry for forming a negative electrode active material layer, which had been prepared in the following compositional ratio, was applied onto both surfaces of a negative electrode collector (copper expanded metal having a porosity of 57% and a thickness of 32 µm (manufactured by Nippon Metal Industry Co., Ltd.)) in an area of 14 mm×20 mm using a die coater so that the total thickness of both surfaces reached 80 µm, then, was dried under reduced pressure at 200°C for 24 hours, and then was pressed, thereby forming negative electrode active material layers on the conductive layers on both surfaces. The thickness (total thickness) of the obtained negative electrode active material layers was 56 µm.

### [Slurry for forming negative electrode active material layer]

| | |
|---|---|
| Water-based dispersion element binder "SBR BM-400B" (manufactured by Zeon Corporation) | 2% by mass |
| Carboxymethyl cellulose (CMC) sodium salt 2200 (manufactured by Daicel Corporation) | 4% by mass |
| Graphite "MAG-E" (manufactured by Hitachi Chemical Company, Ltd.) | 89% by mass |
| Conductive agent "DENKA BLACK battery-grade grain shape" (manufactured by Denka Company Limited) | 5% by mass |

### (Pre-doping rate evaluation unit)

A negative electrode, a cellulose-based separator, a positive electrode, and a cellulose-based separator were superimposed each other so that the respective coated portions were superimposed each other, thereby producing one unit. Ten units were laminated together with the negative electrodes facing downward, and the four sides of the laminate were fixed using tape, thereby producing an electrode-laminated unit.

Meanwhile, on the top of the electrode-laminated unit, a 100 µm-thick lithium metal foil was installed as a reference electrode and a lithium ion supply source.

Meanwhile, as the cellulose-based separator, a commercially available 10 µm-thick cellulose-based separator was used.

Power supply tabs for the positive electrode were welded to individual non-coated portions in the positive electrode collector in the produced electrode-laminated unit. Meanwhile, the power supply tab for the positive electrode was produced by coating an aluminum sheet having a width of 50 mm, a length of 50 mm, and a thickness of 0.2 mm with a sealant film.

Similarly, power supply tabs for the negative electrode were welded to individual non-coated portions in the negative electrode collector and the lithium metal foil. Meanwhile, the power supply tab for the negative electrode was produced by coating a copper sheet having a width of 50 mm, a length of 50 mm, and a thickness of 0.2 mm with a sealant film.

Next, the electrode-laminated unit was disposed at a location which served as a reception portion on an external film so that the respective power supply tabs protruded outward from the end portion of the external film, and the external film was superimposed on this electrode-laminated unit and was thermally fused except for an electrolytic solution injection opening.

Meanwhile, an electrolytic solution including LiPF₆ having a concentration of 1.0 mol/L was prepared using a mixed solvent of ethylene carbonate, diethyl carbonate, and methyl ethyl carbonate (3:3:4 in terms of volume ratio).

Next, the electrolytic solution was injected through the electrolytic solution injection opening, and then the electrolytic solution injection opening was thermally fused, thereby producing a pre-doping rate evaluation unit.

### [Evaluation]

### <Pre-doping characteristics>

The negative electrodes and the lithium metal foil in the pre-doping rate evaluation unit were short-circuited at 30°C and normal pressure, and the potentials of the respective negative electrodes were measured.

The time taken for the potentials of all of the negative electrodes to be stable at near 0 V was measured and considered as the pre-doping completion time.

The evaluation results are shown in Table 1.

**[Table 1]**

| | Through hole | | | | Evaluation | |
|---|---|---|---|---|---|---|
| | Hole density | Average opening diameter | Maximum value of inter-hole distances | Average value of inter-hole distances | Coating properties | Pre-doping characteristics |
| | Holes/mm² | µm | µm | µm | | day |
| Example 1 | 748 | 12 | 81 | 55 | A | 1 |
| Example 2 | 182 | 35 | 192 | 162 | A | 3 |
| Example 3 | 140 | 45 | 223 | 121 | A | 4 |
| Example 4 | 112 | 26 | 267 | 145 | A | 6 |
| Example 5 | 51 | 81 | 146 | 62 | B | 3 |
| Comparative Example 1 | 12 | 150 | 179 | 100 | C | 3 |
| Comparative Example 2 | 382 | 4 | 322 | 56 | A | 10 |
| Comparative Example 3 | 9 | 85 | 402 | 262 | B | 14 |
| Comparative Example 4 | 16 | 62 | 289 | 189 | B | 8 |

As shown in Table 1, from the comparison between the examples and the comparative examples, it is found that, when the average opening diameter of the through holes formed in the aluminum plate is set to 1 µm to 100 µm, the density thereof is set to 50 through holes/mm² to 2,000 through holes/mm², and the maximum inter-hole distance between adjacent through holes is set to 300 µm or less, the coating properties of the active material layer improve and thus the uniformity of the surface improves, and the pre-doping characteristics can be improved.

In addition, from the comparison between Examples 1 to 4, it is found that, as the maximum value and the average value of the inter-hole distances decrease, the pre-doping rate becomes faster, and the pre-doping characteristics can be improved.

In addition, from the comparison between Examples 1 and 5, it is found that, as the density increases, the pre-doping characteristics improve, and, as the average opening diameter decreases, the coating properties improve.

In addition, from Comparative Example 1, it is found that, when the average opening diameter exceeds 100 µm, the coating properties degrade.

In addition, from Comparative Examples 1, 3, and 4, it is found that, when the density is less than 50 through holes/mm², the pre-doping characteristics degrade.

In addition, from Comparative Examples 2 and 3, it is found that, when the maximum value of the inter-hole distance exceeds 300 µm, the pre-doping characteristics degrade.

The above-described facts show that the effects of the present invention are evident.

### Explanation of References

- 1:: aluminum substrate
- 2:: oxidized film
- 3:: aluminum substrate having through holes
- 4:: oxidized film having through holes
- 5:: through hole
- 6:: first metal layer
- 7:: second metal layer
- 10:: aluminum plate
- 30:: electrode
- 32:: active material layer

## Claims

1. An aluminum plate having a plurality of through holes that penetrate in a thickness direction,
wherein an average opening diameter of the through holes is 1 µm to 100 µm,
a density of the through holes is 50 through holes/mm² to 2,000 through holes/mm², and
the maximum value of the inter-hole distance between adjacent through holes is 300 µm or less,
wherein the average opening diameter of the through holes is obtained by capturing an image of the surface of the aluminum plate using a high-resolution scanning electron microscope (SEM) at a magnification of 100 times, extracting at least 20 through holes having a circumference that continues in a ring shape from the obtained SEM image, scanning the maximum values of the distances between the end portions of the opening portions of the through holes as the opening diameters, and computing the average value thereof as the average opening diameter,
wherein the density of the through holes is obtained by installing a parallel light optical unit on one surface side of the aluminum plate, transmitting parallel light, capturing an image of the surface of the aluminum plate using an optical microscope at a magnification of 100 times on the other surface side of the aluminum plate so as to obtain a photograph, counting the number of through holes at five 100 mm×75 mm visual fields in a 10 cm×10 cm range of the obtained photograph, calculating the number of through holes per square millimeter, and considering the average value of the values measured at the respective visual fields (five places) as the density of the through holes, and
wherein the inter-hole distance is obtained as defined in the description, wherein the aluminum plate having a plurality of through holes is obtainable by carrying out the following steps:
an oxidized film-forming step of forming an oxidized film by carrying out an oxidized film-forming treatment on the surface of an aluminum substrate,
a through hole-forming step of forming through holes by carrying out an electrochemical dissolution treatment after the oxidized film-forming step, and
an oxidized film-removing step of removing the oxidized film from the aluminum plate.

2. The aluminum plate according to claim 1,
wherein an average of the inter-hole distances between adjacent through holes is 150 µm or less.

3. The aluminum plate according to claim 1 or 2,
wherein the average opening diameter of the through holes is more than 5 µm and 80 µm or less.

4. The aluminum plate according to any one of claims 1 to 3,
wherein a percentage of the through holes having an opening diameter of 5 µm or less is 50% or less,
wherein the percentage of the through holes having an opening diameter of 5 µm or less is obtained by capturing a SEM photograph using the method defined in claim 1 for the measurement of the average opening diameter of the through holes, measuring the opening diameters of all of the through holes at five 30 mm×30 mm visual fields in a 10 cm×10 cm range of the obtained photograph, and computing the percentage of the number of through holes having an opening diameter of 5 µm or less in the number of all of the measured through holes.

5. The aluminum plate according to any one of claims 1 to 4, comprising:
a metal layer covering at least an inner surface of the through holes.

6. The aluminum plate according to any one of claims 1 to 5, wherein the thickness of the aluminum substrate is 10 µm to 30 µm.

## Patentansprüche

1. Aluminiumplatte, die eine Vielzahl von durchstoßenden Löchern aufweist, die in Dickenrichtung durchstoßen,
worin ein mittlerer Öffnungsdurchmesser der durchstoßenden Löcher 1 µm bis 100 µm beträgt,
die Dichte der durchstoßenden Löcher 50 durchstoßende Löcher/mm² bis 2.000 durchstoßende Löcher/mm² beträgt und
der Maximalwert des Lochabstands zwischen benachbarten durchstoßenden Löchern 300 µm oder weniger beträgt,
worin der mittlere Öffnungsdurchmesser der durchstoßenden Löcher erhalten wird durch Aufnehmen eines Bildes der Oberfläche der Aluminiumplatte mit einem hochauflösenden Rasterelektronenmikroskop (SEM) bei einer Vergrößerung von 100-fach, Ausschneiden von mindestens 20 durchstoßenden Löchern mit einem Umfang, der sich in einer Ringform fortsetzt, von der erhaltenen SEM-Aufnahme, Scannen der Maximalwerte der Abstände zwischen den Endbereichen der Öffnungsbereiche der durchstoßenden Löcher als Öffnungsdurchmesser, und Berechnen des Mittelwerts hiervon als mittlerer Öffnungsdurchmesser,
worin die Dichte der durchstoßenden Löcher erhalten wird durch Installieren einer optischen Parallellichteinheit auf einer Oberflächenseite der Aluminiumplatte, Transmittieren von parallelem Licht, Aufnehmen eines Bildes der Oberfläche der Aluminiumplatte mit einem optischen Mikroskop bei einer Vergrößerung von 100-fach auf der anderen Oberflächenseite der Aluminiumplatte, um so eine Fotographie zu erhalten, Zählen der Anzahl der durchstoßenden Löcher in fünf visuellen Gebieten von 100 mm × 75 mm in einem Bereich von 10 cm × 10 cm der erhaltenen Fotographie, Berechnen der Anzahl der durchstoßenden Löcher je Quadratmillimeter, und Betrachten des Mittelwerts der Werte, die in den entsprechenden visuellen Feldern gemessen wurden (fünf Stellen), als Dichte der durchstoßenden Löcher, und
worin der Lochabstand erhalten wird wie in der Beschreibung definiert,
worin die Aluminiumplatte mit einer Vielzahl von durchstoßenden Löchern erhältlich ist durch Durchführen der folgenden Schritte:
ein oxidierter Film-Bildungsschritt zum Bilden eines oxidierten Films durch Durchführen einer oxidierter Film-Bildungsbehandlung auf der Oberfläche des Aluminiumsubstrats,
ein durchstoßende Löcher-Bildungsschritt zum Bilden von durchstoßenden Löchern durch Durchführen einer elektrochemischen Auflösungsbehandlung nach dem oxidierter Film-Bildungsschritt, und
ein oxidierter Film-Entfernungsschritt zum Entfernen des oxidierten Films von der Aluminiumplatte.

2. Aluminiumplatte gemäß Anspruch 1, worin der Mittelwert des Lochabstands zwischen benachbarten durchstoßenden Löchern 150 µm oder weniger beträgt.

3. Aluminiumplatte gemäß Anspruch 1 oder 2, worin der mittlere Öffnungsdurchmesser der durchstoßenden Löcher mehr als 5 µm und 80 µm oder weniger beträgt.

4. Aluminiumplatte gemäß irgendeinem der Ansprüche 1 bis 3, worin der Prozentanteil der durchstoßenden Löcher mit einem Öffnungsdurchmesser von 5 µm oder weniger 50 % oder weniger beträgt,
worin der Prozentanteil der durchstoßenden Löcher mit einem Öffnungsdurchmesser von 5 µm oder weniger erhalten wird durch Aufnehmen einer SEM-Fotographie mit dem in Anspruch 1 definierten Verfahren zur Messung des mittleren Öffnungsdurchmessers der durchstoßenden Löcher, Messen der Öffnungsdurchmesser von allen durchstoßenden Löchern in fünf visuellen Feldern von 30 mm × 30 mm in einem Bereich von 10 cm × 10 cm der erhaltenen Fotographie, und Berechnen des Prozentanteils der Anzahl der durchstoßenden Löcher mit einem Öffnungsdurchmesser von 5 µm oder weniger an der Zahl von allen gemessenen durchstoßenden Löchern.

5. Aluminiumplatte gemäß irgendeinem der Ansprüche 1 bis 4, umfassend:
eine Metallschicht, die zumindest eine innere Oberfläche der durchstoßenden Löcher bedeckt.

6. Aluminiumplatte gemäß irgendeinem der Ansprüche 1 bis 5, worin die Dicke des Aluminiumsubstrats 10 µm bis 30 µm beträgt.

## Revendications

1. Plaque d'aluminium ayant une pluralité de trous traversants qui pénètrent dans le sens de l'épaisseur,
dans laquelle un diamètre d'ouverture moyen des trous traversants est de 1 µm à 100 µm,
une densité des trous traversants est de 50 trous traversants par mm² à 2 000 trous traversants par mm², et
la valeur maximale de la distance entre trous entre des trous traversants adjacents est de 300 µm ou moins,
dans laquelle le diamètre d'ouverture moyen des trous traversants est obtenu en capturant une image de la surface de la plaque d'aluminium en utilisant un microscope électronique à balayage (SEM) de résolution élevée pour un grossissement de 100 fois, en extrayant au moins 20 trous traversants ayant une circonférence qui continue sous une forme annulaire à partir de l'image SEM obtenue, en balayant les valeurs maximales des distances entre les parties d'extrémité des parties d'ouverture des trous traversants comme diamètres d'ouverture, et en calculant leur valeur moyenne comme diamètre d'ouverture moyen,
dans laquelle la densité des trous traversants est obtenue en installant une unité optique à lumière parallèle sur un premier côté de surface de la plaque d'aluminium, en transmettant de la lumière parallèle, en capturant une image de la surface de la plaque d'aluminium en utilisant un microscope optique pour un grossissement de 100 fois sur l'autre côté de surface de la plaque d'aluminium de manière à obtenir une photographie, en comptant le nombre de trous traversants dans cinq champs visuels de 100 mm x 75 mm dans une plage de 10 cm x 10 cm de la photographie obtenue, en calculant le nombre de trous traversants par millimètre carré, et en considérant la valeur moyenne des valeurs mesurées dans les champs visuels respectifs (cinq places) comme densité des trous traversants, et
dans laquelle la distance entre trous est obtenue comme défini dans la description, dans laquelle la plaque d'aluminium ayant une pluralité de trous traversants peut être obtenue en effectuant les étapes suivantes :
une étape de formation de film oxydé pour former un film oxydé en effectuant un traitement de formation de film oxydé sur la surface du substrat d'aluminium,
une étape de formation de trous traversants pour former des trous traversants en effectuant un traitement de dissolution électrochimique après l'étape de formation de film oxydé, et
une étape de retrait de film oxydé pour retirer le film oxydé de la plaque d'aluminium.

2. Plaque d'aluminium selon la revendication 1,
dans laquelle une moyenne des distances entre trous entre des trous traversants adjacents est de 150 µm ou moins.

3. Plaque d'aluminium selon la revendication 1 ou 2,
dans laquelle le diamètre d'ouverture moyen des trous traversants est de plus de 5 µm et est de 80 µm ou moins.

4. Plaque d'aluminium selon l'une quelconque des revendications 1 à 3,
dans laquelle un pourcentage des trous traversants ayant un diamètre d'ouverture de 5 µm ou moins est de 50 % ou moins,
dans laquelle le pourcentage des trous traversants ayant un diamètre d'ouverture de 5 µm ou moins est obtenu en capturant une photographie SEM en utilisant le procédé défini dans la revendication 1 pour la mesure du diamètre d'ouverture moyen des trous traversants, en mesurant les diamètres d'ouverture de la totalité des trous traversants dans cinq champs visuels de 30 mm x 30 mm dans une plage de 10 cm x 10 cm de la photographie obtenue, et en calculant le pourcentage du nombre de trous traversants ayant un diamètre d'ouverture de 5 µm ou moins dans le nombre de la totalité des trous traversants mesurés.

5. Plaque d'aluminium selon l'une quelconque des revendications 1 à 4, comprenant :
une couche métallique couvrant au moins une surface interne des trous traversants.

6. Plaque d'aluminium selon l'une quelconque des revendications 1 à 5, dans laquelle l'épaisseur du substrat d'aluminium est de 10 µm à 30 µm.
